# EUROPEAN PATENT APPLICATION

(11) **EP 2 840 099 A1**
(43) Date of publication of application: **25.02.2015**
(21) Application number: 14179755.5
(22) Date of filing: 04.08.2014
(51) Int. Cl.: C08F 220/18

(54) **Acrylic Rubber Composition and Sealing Device including the same**

(30) Priority: 05.08.2013 JP 2013162680
(71) Applicant: JTEKT CORPORATION, Osaka-shi Osaka 542-8502 (JP)
(72) Inventor: Tsuda, Takeshi, Osaka-shi, Osaka, 542-8502 (JP)
(74) Representative: Winter, Brandl, Fürniss, Hübner, Röss, Kaiser, Polte - Partnerschaft mbB

(57) **Abstract**

A sheet is made of ACM. A backbone monomer of ACM is a mixture of ethyl acrylate and butyl acrylate. The weight ratio of butyl acrylate to ethyl acrylate is 0.8 to 1.3. A crosslinking monomer of ACM has a carboxyl group.

## Description

### BACKGROUND OF THE INVENTION

### 1. Field of the Invention

The invention relates to an acrylic rubber composition and a sealing device including the same.

### 2. Description of Related Art

Japanese Patent Application Publication No. 2006-036826 (JP 2006-036826 A) describes a conventional acrylic rubber composition. The acrylic rubber composition contains ethylene-acrylic rubber. The ethylene-acrylic rubber imparts heat resistance and compression set resistance that are required of, for example, a bearing seal, to the acrylic rubber composition.

The acrylic rubber composition contains a backbone monomer and a crosslinking monomer. The material properties of the acrylic rubber composition may be varied by changing the kinds and combinations of a backbone monomer and a crosslinking monomer. Note that, a material that satisfies all the requirements for, for example, a bearing seal, such as heat resistance, compression set resistance, oil resistance, and low-temperature resistance is not known. Thus, attempts have been made to improve the oil resistance by adding an additive to the ethylene-acrylic rubber having low oil resistance and to improve the low-temperature resistance.

However, currently, a method for improving the heat resistance, compression set resistance, oil resistance, and low-temperature resistance of the ethylene-acrylic rubber is not known.

When two or more kinds of backbone monomers are blended to prepare an acrylic rubber composition, the acrylic rubber composition is likely to be strongly affected by the disadvantageous properties of any one of the blended backbone monomers. However, a method of effectively creating synergy is not currently known.

### SUMMARY OF THE INVENTION

One object of the invention is to provide an acrylic rubber composition with improved heat resistance, compression set resistance, oil resistance, and low-temperature resistance, and to provide a sealing device including the acrylic rubber composition.

An aspect of the invention relates to an acrylic rubber composition essentially consisting of a first polymer containing a backbone monomer and a crosslinking monomer. The backbone monomer is a mixture of ethyl acrylate and butyl acrylate. The weight ratio of butyl acrylate to ethyl acrylate is 0.8 to 1.3. The crosslinking monomer has a carboxyl group.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating a sheet of an acrylic rubber composition according to a first embodiment of the invention;
FIG. 2 is a view illustrating the chemical structure of ACM of the acrylic rubber composition;
FIG. 3 is a view illustrating the chemical structure of a backbone monomer of the ACM;
FIG. 4 is a view illustrating the chemical structures of two kinds of backbone monomers of the ACM;
FIG. 5 is a schematic sectional view illustrating a sealing device including the acrylic rubber composition and its surroundings;
FIG. 6 is a schematic diagram illustrating a sheet of an acrylic rubber composition according to a second embodiment of the invention;
FIG. 7 is a view illustrating the chemical structure of AEM of the acrylic rubber composition; and
FIG. 8 is a graph illustrating the results of evaluations on each of acrylic rubber compositions in examples and comparative examples.

### DETAILED DESCRIPTION OF EMBODIMENTS

Hereinafter, example embodiments of the invention will be described in detail with reference to the accompanying drawings.

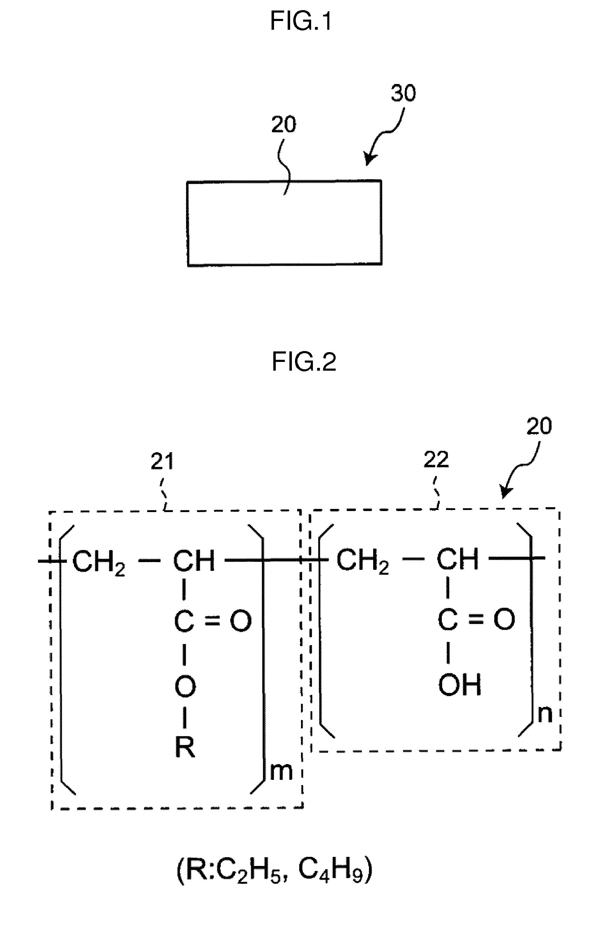

FIG. 1 is a schematic diagram illustrating a sheet of an acrylic rubber composition according to a first embodiment of the invention.

As illustrated in FIG. 1, the acrylic rubber composition is made of acrylic rubber (ACM) 20 which is an example of a first polymer. The ACM 20 forms a sheet 30 which is in the form of a flat plate. Acrylic rubber compositions are classified broadly into ACM and ethylene acrylate rubber (AEM).

FIG. 2 illustrates the chemical structure of the ACM 20.

As illustrated in FIG. 2, the ACM 20 contains a backbone monomer 21 and a crosslinking monomer 22. The backbone monomer 21 is obtained by blending ethyl acrylate (EA) with butyl acrylate (BA). In the backbone monomer 21, the weight ratio of BA to EA is 0.8 to 1.3, and is preferably 0.95 to 1.05. The crosslinking monomer 22 has a carboxyl group.

Examples of the crosslinking monomer having a carboxyl group include acrylic acid, methacrylic acid, crotonic acid, 2-pentenoic acid, maleic acid, fumaric acid, itaconic acid, maleic acid monoalkyl ester, fumaric acid monoalkyl ester, and itaconic acid monoalkyl ester.

Examples of the crosslinking monomer 22 having an active chlorine group include 2-chloroethyl vinyl ether, 2-chloroethyl acrylate, vinylbenzyl chloride, vinyl chloroacetate, and allyl chloroacetate.

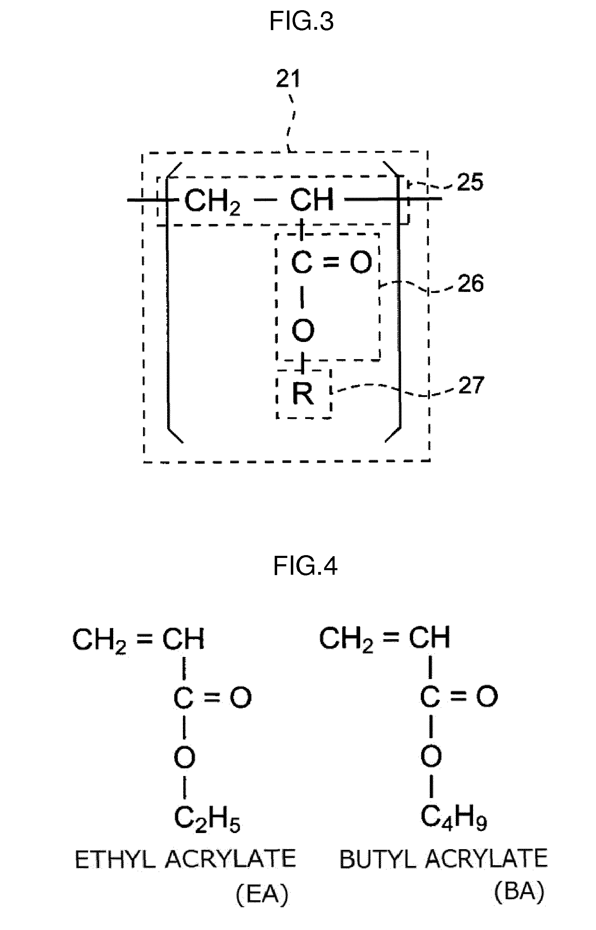

FIG. 3 illustrates the chemical structure of the backbone monomer 21 of the ACM 20. FIG. 4 illustrates the chemical structures of ethyl acrylate (EA) and butyl acrylate (BA) of the backbone monomer 21 of the ACM 20.

As illustrated in FIG. 3, the backbone monomer 21 contains a main chain 25, a side-chain ester structure (polar side chain) 26, and a side-chain alkyl group 27. The main chain 25 is related to heat resistance. The side-chain ester structure 26 and the side-chain alkyl group 27 are related to oil resistance, low-temperature resistance, and heat resistance.

The backbone monomer 21 of the ACM 20 contains EA and BA. The basic property of the ACM 20 is determined based on the combination of EA and BA. As the backbone monomer 21 of the ACM 20, methoxy ethyl acrylate (MEA) may also be used.

Table 1 indicates environment resistance, more specifically, low-temperature resistance, oil resistance, and heat resistance of backbone monomers of commonly-used AEM and ACM. Table 2 indicates properties, more specifically, heat resistance, compression set resistance, and processability of crosslinking monomers of commonly-used AEM and ACM.

**Table 1**

| Polymer | Kind of Backbone Monomer | Environment Resistance | | |
|---|---|---|---|---|
| | | Low-temperature resistance | Oil Resistance | Heat Resistance |
| ACM | Ethyl Acrylate (EA) | D | B | B |
| | Butyl Acrylate (BA) | A | D | C |
| | Methoxy Ethyl Acrylate (MEA) | B | A | D |
| AEM | Ethylene Methyl Acrylate (EMA) | C | C | A |

**Table 2**

| Polymer | Kind of Crosslinking Monomer | Heat Resistance | Compression Set Resistance | Processability |
|---|---|---|---|---|
| ACM | Epoxy-Based | D | C | B |
| | Active Chlorine-Based | C | D | C |
| | Carboxyl-Based | A | A | C |
| AEM | Carboxyl-Based | A | B | C |
| | Peroxide-Crosslinked | B | B | A |

In Tables 1, 2, "A" indicates that the property is excellent, "B" indicates that the property is good, "C" indicates that the property is slightly poor, and "D" indicates that the property is poor.

As indicated in Tables 1, 2, the properties of ACM vary greatly depending on the kinds of the backbone monomer and the crosslinking monomer.

For example, as indicated in Table 1, the oil resistance of the ACM containing BA is poor, but the oil resistance of the ACM containing MEA is excellent.

As indicated in Table 2, the heat resistance and the compression set resistance of the ACM containing the carboxyl-based crosslinking monomer are excellent. The heat resistance of the AEM containing the carboxyl-based crosslinking monomer is excellent.

Next, a method of preparing the sheet 30 will be described.

The ACM 20 is prepared by copolymerizing the backbone monomer 21 and the crosslinking monomer 22 according to a known method such as emulsion polymerization, suspension polymerization, solution polymerization, or bulk polymerization. In this case, when the weight percent of the entirety of the backbone monomer 21 is expressed by 100 wt%, the weight percent of the crosslinking monomer 22 is 1 wt% to 5 wt%.

A reinforcing material such as carbon black or silica and/or a solid lubricant such as graphite, PTFE, or molybdenum disulfide are/is added to the ACM 20, depending on required properties. In this case, a single kind or two or more kinds of reinforcing material, and a single kind or two or more kinds of solid lubricant are added to the ACM 20 depending on the required properties.

The reinforcing material is added to the ACM 20 in order mainly to improve the reinforcing property. When the weight percent of the entirety of the ACM 20 is expressed by 100 wt%, the weight percent of the added reinforcing material is preferably 60 wt% to 80 wt%. This is because, it is not preferable that the weight percent of the added reinforcing material be less than 60 wt% because the reinforcing effect is low, and it is also not preferable that the weight percent of the added reinforcing material be more than 80 wt% because the flexibility of the ACM 20 is decreased and thus the ACM 20 becomes hard and brittle.

The solid lubricant is added to the ACM 20 in order mainly to improve wear resistance. When the weight percent of the entirety of the ACM 20 is expressed by 100 wt%, the weight percent of the added solid lubricant is preferably 10 wt% to 20 wt%. This is because, it is not preferable that the weight percent of the added solid lubricant be less than 10 wt% because the lubricating effect is low, and it is also not preferable that the weight percent of the added solid lubricant be more than 20 wt% because the ACM 20 becomes hard and brittle.

In addition to the above-described additives, for example, the following materials are optionally added to the ACM 20 as needed: acetylene black, attapulgite, alumina, kaolin clay, glass fiber, glass beads, glass flake, calcium silicate (wollastonite), calcium silicate (xonotlite), calcium silicate (synthetic, amorphous), zirconium silicate, zinc oxide whisker, zeolite, sepiolite, selenite, talc, magnesium carbonate, potassium titanate, barium titanate, feldspar powder, hydrotalcite, pyrophyllite (agalmatolite clay), furnace black, bentonite, aluminum borate, mica (phlogopite), mica (muscovite), magnesium sulfate (MOS-HIGE), calcium sulfite, basic magnesium carbonate, silica stone powder, diatomaceous earth, synthetic silica (dry), synthetic silica (wet), graphite powder, antimony trioxide, zirconium oxide, titanium oxide (anatase), titanium oxide (rutile), magnesium oxide, zinc oxide (dry), zinc oxide (wet), iron oxide, aluminum hydroxide, magnesium hydroxide, silicon carbide, calcium carbonate (colloid), calcium carbonate (chalk), calcium carbonate (heavy), calcium carbonate (light), barium carbonate, carbon fiber, silicon nitride, calcium sulfate (anhydrous), barium sulfate (barite), and barium sulfate (sedimentary).

The kind and the addition amount of each of the reinforcing material, the solid lubricant, and the like that are added to the ACM 20 may vary depending on required properties.

The ACM 20 is prepared with the use of a kneader such as Intermix, a pressure kneader, or a closed Banbury mixer, or an open roll, or the like.

Table 3 indicates a blend ratio of EA and BA and evaluation results of properties regarding each of evaluation materials (polymers A, B, C, D, E) of Examples 1 to 5 that vary in the blend ratio of EA and BA of the backbone monomer 21 of the ACM 20 of the sheet 30. Table 4 indicates compositions of raw materials of Examples 1 to 5.

**Table 3**

| Base Polymer | Item | Evaluation Material | Kind of Backbone Monomer | | Kind of Crosslinking Monomer | Low-temperature Resistance (Glass Transition Temperature, °C) | | Heat Resistance (Change ratio of Tensile Strength, %) | | Oil Resistance (Change ratio of Tensile Strength, %) | | Compression set resistance (Compression Set Ratio, %) | |
|---|---|---|---|---|---|---|---|---|---|---|---|---|---|
| | | | Ethyl Acrylate (EA) | Butyl Acrylate (BA) | | Ratio | Measured Value | Ratio | Measured Value | Ratio | Measured Value | Ratio | Measured Value |
| ACM | Example 1 | Polymer A | 1.0 | 0.5 | Carboxyl-Crosslinked | 1.4 | -20 | 0.9 | -31 | 1.2 | -13 | 0.5 | 46 |
| | Example 2 | Polymer B | 1.0 | 0.8 | Carboxyl-Crosslinked | 1.2 | -24 | 1.0 | -30 | 1.1 | -14 | 0.7 | 33 |
| | Example 3 | Polymer C | 1.0 | 1.0 | Carboxyl-Crosslinked | 1.0 | -28 | 1.0 | -29 | 1.0 | -15 | 1.0 | 25 |
| | Example 4 | Polymer D | 1.0 | 1.3 | Carboxyl-Crosslinked | 0.9 | -31 | 1.0 | -29 | 0.7 | -22 | 2.2 | 11 |
| | Example 5 | Polymer E | 1.0 | 1.5 | Carboxyl-Crosslinked | 0.8 | -33 | 1.0 | -28 | 0.6 | -24 | 8.2 | 3 |

**Table 4**

| Kind | | Raw Materials | Example 1 | Example 2 | Example 3 | Example 4 | Example 5 |
|---|---|---|---|---|---|---|---|
| Base Polymer | ACM | Polymer A | 100.0 | - | - | - | - |
| | | Polymer B | - | 100.0 | - | - | - |
| | | Polymer C | - | - | 100.0 | - | - |
| | | Polymer D | - | - | - | 100.0 | - |
| | | Polymer E | - | - | - | - | 100.0 |
| Reinforcing Material | | Carbon Black (FEF) | 60.0 | 60.0 | 60.0 | 60.0 | 60.0 |
| Antioxidant | | 4,4'-Bis(α,α-Dimethyl Benzyl)Diphenylamine | 2.0 | 2.0 | 2.0 | 2.0 | 2.0 |
| Crosslinking Agent | | Hexamethylenediamine Carbamate | 0.6 | 0.6 | 0.6 | 0.6 | 0.6 |
| Crosslinking Accelerator | | Diorthotolylguanidine | 1.0 | 1.0 | 1.0 | 1.0 | 1.0 |
| Processing Aid | | Stearic Acid (Saturated Fatty Acid) | 2.0 | 2.0 | 2.0 | 2.0 | 2.0 |

The properties of Examples 1 to 5 were evaluated as follows.

Regarding the low-temperature resistance, the glass transition temperature of the sheet 30 was measured with the use of a differential scanning calorimeter (DSC).

Regarding the heat resistance, the change ratio of the tensile strength of a test piece was calculated. Specifically, a dumbbell-shaped No. 3 test piece was prepared from the sheet 30 according to JIS K6251, the tensile strength of the test piece was measured before and after heating of the test piece, and the change ratio of the tensile strength was calculated. The test piece was heated in an environment of 150°C for 72 hours.

Regarding the oil resistance, the change ratio of the tensile strength of the evaluation material of the test piece was calculated. Specifically, the test piece was prepared according to JIS K6251, the tensile strength of the test piece was measured before and after the test piece was immersed in IRM 903 oil, and the change ratio of the tensile strength was calculated. The test piece was immersed in IRM 903 oil in an environment of 150°C for 72 hours.

Regarding the compression set resistance, the compression set ratio of the test piece was calculated. Specifically, a cylindrical test piece was prepared from the sheet 30 according to JIS K6262, the test piece was left in an environment of 175°C for 72 hours while being compressed by 25%, and the compression set ratio of the test piece after cancellation of the compression of the test piece was measured.

The properties of Example 1 were evaluated as follows. In Example 1, there was used a polymer A in which a backbone monomer is a mixture of EA and BA, the weight ratio of BA to EA is 0.5, and a crosslinking monomer has a carboxyl group. 100 wt% of the polymer A, 60 wt% of carbon black (FEF) as a reinforcing material, 2 wt% of 4,4'-bis(α,α-dimethyl benzyl) diphenylamine as an antioxidant, 0.6 wt% of hexamethylenediamine carbamate as a crosslinking agent, 1 wt% of diorthotolylguanidine as a crosslinking accelerator, and 2 wt% of stearic acid (saturated fatty acid) as a processing aid were kneaded with the use of a pressure kneader and an open roll which are well-known. The kneaded material was subjected to primary vulcanization at 180°C for 10 minutes to 15 minutes and then subjected to secondary vulcanization at 180°C for 4 hours to prepare the sheet 30. Using the prepared sheet 30, the low-temperature resistance, heat resistance, oil resistance, and compression set resistance were measured and calculated. The results are indicated in Table 3.

The properties of Example 2 were evaluated as follows. The sheet 30 was prepared by the same method as that adopted in Example 1, except that a polymer B was used instead of the polymer A. In the polymer B, a backbone monomer is a mixture of EA and BA, the weight ratio of BA to EA is 0.8, and a crosslinking monomer has a carboxyl group. The same evaluation as that in Example 1 was performed on the sheet 30. The results are indicated in Table 3.

The properties of Example 3 were evaluated as follows. The sheet 30 was prepared by the same method as that adopted in Example 1, except that a polymer C was used instead of the polymer A. In the polymer C, a backbone monomer is a mixture of EA and BA, the weight ratio of BA to EA is 1.0, and a crosslinking monomer has a carboxyl group. The same evaluation as that in Example 1 was performed on the sheet 30. The results are indicated in Table 3.

The properties of Example 4 were evaluated as follows. The sheet 30 was prepared by the same method as that adopted in Example 1, except that a polymer D was used instead of the polymer A. In the polymer D, a backbone monomer is a mixture of EA and BA, the weight ratio of BA to EA is 1.3, and a crosslinking monomer has a carboxyl group. The same evaluation as that in Example 1 was performed on the sheet 30. The results are indicated in Table 3.

The properties of Example 5 were evaluated as follows. The sheet 30 was prepared by the same method as that adopted in Example 1, except that a polymer E was used instead of the polymer A. In the polymer E, a backbone monomer is a mixture of EA and BA, the weight ratio of BA to EA is 1.5, and a crosslinking monomer has a carboxyl group. The same evaluation as that in Example 1 was performed on the sheet 30. The results are indicated in Table 3.

The ratios of the measured values of the low-temperature resistance, heat resistance, oil resistance, and compression set resistance of Examples 1, 2, 4, 5 with respect to the measured values of the low-temperature resistance, heat resistance, oil resistance, and compression set resistance of Example 3 were calculated using the measured values of Example 3 as the reference values. The results are indicated in Table 3. Each of the heat resistance, oil resistance, and compression set resistance is high when the ratio of the measured value thereof to the measured value of Example 3 is 1 or higher. In addition, the low-temperature resistance is high when the ratio of the measured value thereof to the measured value of Example 3 is lower than 1. Further, the lower the measured value is, the higher the low-temperature resistance is.

As indicated in Table 3, as the weight ratio of BA to EA increases from 0.5 to 1.5, the glass transition temperature decreases and low-temperature resistance is improved. Regarding the heat resistance, as the weight ratio of BA to EA increases, the change ratio of the tensile strength increases, and the heat resistance is improved. On the other hand, regarding the oil resistance, as the weight ratio of BA to EA increases, the change ratio of the tensile strength decreases, and the oil resistance decreases. Regarding the compression set resistance, as the weight ratio of BA to EA increases, the compression set ratio decreases, and compression set resistance is improved.

Thus, when the weight ratio of BA to EA is 0.8 to 1.3 and is preferably 1.0, the heat resistance, low-temperature resistance, oil resistance, and compression set resistance are improved. When the weight ratio of BA to EA is 0.5, the low-temperature resistance, heat resistance, and compression set resistance decrease. When the weight ratio of BA to EA is 1.5, the oil resistance decreases.

With the sheet 30 having the above-described configuration, the backbone monomer 21 of the ACM 20 is a mixture of EA and BA, the weight ratio of BA to EA is 0.8 to 1.3, and the crosslinking monomer 22 of the ACM 20 has a carboxyl group. Therefore, synergy among EA, BA, and the carboxyl group is created. That is, EA imparts the heat resistance and oil resistance to the sheet 30, BA imparts the low-temperature resistance and compression set resistance to the sheet 30, and the crosslinking monomer having the carboxyl group imparts the heat resistance, compression set resistance, processability (formability), and storage stability to the sheet 30. Due to the synergy among EA, BA, and the carboxyl group, the heat resistance, low-temperature resistance, oil resistance, and compression set resistance of the sheet 30 are improved. Further, the useful life of the sheet 30 is prolonged.

When the weight ratio of BA to EA in the backbone monomer 21 of the ACM 20 is 0.95 to 1.05, the weight ratio of BA to EA is optimized, and the heat resistance, compression set resistance, oil resistance, and low-temperature resistance of the sheet 30 are further improved.

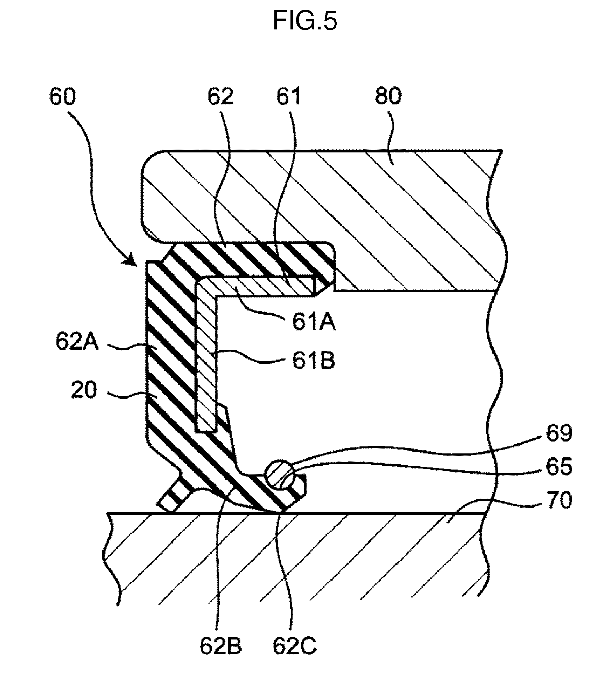

FIG. 5 is a schematic sectional view illustrating a sealing device 60 including the sheet 30 and its surroundings

As illustrated in FIG. 5, the sealing device 60 is disposed near one axial end-side opening between a shaft member 70, which may function as a sliding member, and a housing 80. The sealing device 60 seals the one axial end-side opening between the shaft member 70 and the housing 80. A space defined by the shaft member 70, the housing 80, and the sealing device 60 is filled with, for example, lubricating oil.

The sealing device 60 includes an annular core member 61 and an elastic member 62.

The core member 61 has a generally L-shaped section. The core member 61 has a tubular portion 61A and a radially-extending portion 61B. The tubular portion 61A extends generally along the axial direction. The tubular portion 61A is fixedly fitted to an inner peripheral face of the housing 80. The radially-extending portion 61B extends from one end of an inner peripheral face of the tubular portion 61A inward in the radial direction.

The elastic member 62 has a base portion 62A and a lip portion 62B. The base portion 62A is fixed to the core member 61 so as to cover an outer peripheral face of the tubular portion 61A, an axially outer end face of the radially-extending portion 61B, a part of an axially inner end face of the radially-extending portion 61B, and a radially inner end face of the radially-extending portion 61B. The elastic member 62 is an annular single-piece member made of the ACM 20 from which the sheet 30 is formed.

The lip portion 62B has a generally tubular shape and protrudes in the axial direction from a radially inner end of the base portion 62A. An inner peripheral face of the lip portion 62B has an annular protrusion 62C that protrudes inward in the radial direction. The protrusion 62C is configured to slide on the shaft member 70, which may function as the sliding member. An outer peripheral face of the lip portion 62B has a spring fitting groove 65 formed at a portion overlapping with the protrusion 62C in the radial direction. A spring 69 is fitted into the spring fitting groove 65. The spring 69 presses the protrusion 62C toward the shaft member 70, thereby improving the sealing property of the sealing device 60.

In the sealing device 60 having the above-described configuration, the elastic member 62 is formed of the sheet 30. Therefore, the heat resistance, low-temperature resistance, oil resistance, and compression set resistance of the sealing device 60 are improved.

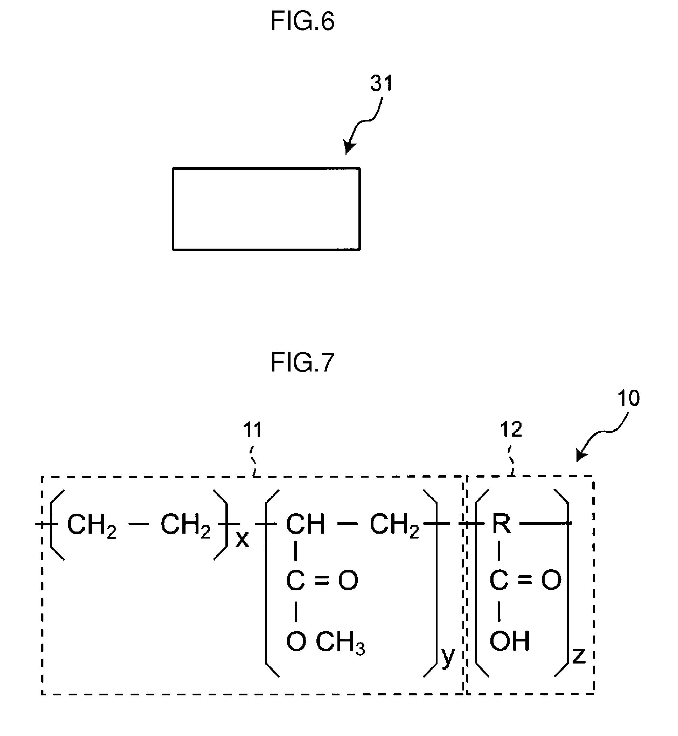

FIG. 6 is a schematic diagram illustrating a sheet of an acrylic rubber composition according to a second embodiment of the invention.

The second embodiment is different from the first embodiment in that the acrylic rubber composition is a mixture of the ACM 20 and AEM 10, which is an example of a second polymer, and forms a sheet 31 which is in the form of a flat plate.

When the weight percent of the entirety of the ACM 20 and the AEM 10 is expressed by 100 wt%, the weight percent of the ACM 20 is 60 wt% to 80 wt% and the weight pecent of the AEM 10 is 20 wt% to 40 wt%. The weight ratio of BAto EAin the backbone monomer 21 of the ACM 20 is 1.0 to 1.2.

FIG. 7 illustrates the chemical structure of the AEM 10.

As illustrated in FIG. 7, the AEM 10 contains a backbone monomer 11 and a crosslinking monomer 12. The backbone monomer 11 of the AEM 10 is ethylene methyl acrylate (EMA) containing ethylene and methyl acrylate. The crosslinking monomer 12 of the AEM 10 has a carboxyl group.

Table 5 indicates the glass transition temperature of each of a trial product of ACM, and Vamac® G, Vamac® GLS, Vamac® DP, and Vamac® Ultra LT (all of which are manufactured by DuPont) which are AEM compositions. In the trial product of the ACM, a backbone monomer is a mixture of EA and BA, the weight ratio of BA to EA is 1.1, and a crosslinking monomer has a carboxyl group.

**Table 5**

| Item | Unit | ACM | AEM | | | |
|---|---|---|---|---|---|---|
| | | Trial Product | G | GLS | DP | Ultra LT |
| Glass Transition Temperature | °C | -28 | -27 | -23 | -29 | -41 |

The AEM 10 is formed of Vamac® Ultra LT having a glass transition temperature of -40°C or lower.

Table 6 illustrates compositions of raw materials of Examples 1 to 5 and Comparative Examples 1 to 3. Table 7 illustrates major blend ratios and evaluation results of properties of Examples 1 to 5 and Comparative Examples 1 to 3.

**Table 6**

| Kind | Product Name | Unit | Example 1 | Example 2 | Example 3 | Example 4 | Example 5 | Comparative Example 1 | Comparative Example 2 | Comparative Example 3 |
|---|---|---|---|---|---|---|---|---|---|---|
| ACM | Trial Product | Part(s) | 90 | 80 | 70 | 60 | 50 | 100 | 70 | 70 |
| AEM | Vamac® Ultra LT | Part(s) | 10 | 20 | 30 | 40 | 50 | 0 | 0 | 0 |
| | Vamac® GLS | Part(s) | 0 | 0 | 0 | 0 | 0 | 0 | 30 | 0 |
| PTFE | TLP10F-1 | Part(s) | 0 | 0 | 0 | 0 | 0 | 0 | 0 | 30 |
| Reinforcing Material | Seast G-SO (Carbon Black) | Part(s) | 65.0 | 65.0 | 65.0 | 65.0 | 65.0 | 65.0 | 65.0 | 65.0 |
| | Nipsil E74P (Wet Silica) | Part(s) | 9.0 | 9.0 | 9.0 | 9.0 | 9.0 | 9.0 | 9.0 | 9.0 |
| Antioxidant | Nocrac CD | Part(s) | 2.0 | 2.0 | 2.0 | 2.0 | 2.0 | 2.0 | 2.0 | 2.0 |
| Crosslinking Agent | Diak No. 1 | Part(s) | 1.5 | 1.5 | 1.5 | 1.5 | 1.5 | 1.5 | 1.5 | 1.5 |
| Crosslinking Accelerator | Nocceler DT | Part(s) | 1.0 | 1.0 | 1.0 | 1.0 | 1.0 | 1.0 | 1.0 | 1.0 |
| Retarder | Anscorch CTP | Part(s) | 0.3 | 0.3 | 0.3 | 0.3 | 0.3 | 0.3 | 0.3 | 0.3 |
| Processing Aid | Lunac S-70V | Part(s) | 2.0 | 2.0 | 2.0 | 2.0 | 2.0 | 2.0 | 2.0 | 2.0 |
| | Armeen 18D | Part(s) | 0.5 | 0.5 | 0.5 | 0.5 | 0.5 | 0.5 | 0.5 | 0.5 |
| | Phosphanol RL-210 | Part(s) | 2.0 | 2.0 | 2.0 | 2.0 | 2.0 | 2.0 | 2.0 | 2.0 |
| Coupling Agent | A-187T | Part(s) | 0.5 | 0.5 | 0.5 | 0.5 | 0.5 | 0.5 | 0.5 | 0.5 |

**Table 7**

| Item | | | Unit | Example 1 | Example 2 | Example 3 | Example 4 | Example 5 | Comparati ve Example 1 | Comparati ve Example 2 | Comparati ve Example 3 |
|---|---|---|---|---|---|---|---|---|---|---|---|
| Composition | ACM | Trial Product | Part(s) | 90 | 80 | 70 | 60 | 50 | 100 | 70 | 70 |
| | AEM | Vamac® Ultra LT | Part(s) | 10 | 20 | 30 | 40 | 50 | 0 | 0 | 0 |
| | | Vamac® GLS | Part(s) | 0 | 0 | 0 | 0 | 0 | 0 | 30 | 0 |
| | PTFE | TLP10F-1 | Part(s) | 0 | 0 | 0 | 0 | 0 | 0 | 0 | 30 |
| Evaluation Result | Wear Test | Wear Volume | mm³ | 72 | 65 | 58 | 51 | 44 | 79 | 64 | 550 |
| | Heat Resistance Test | Change ratio of Tensile Strength | % | 0 | 0 | 0 | 0 | 0 | 0 | -1 | 1 |
| | | Hardness Change | Point | 2 | 2 | 1 | 0 | 0 | 3 | 3 | 3 |
| | | Compression Set Ratio | % | 26 | 23 | 21 | 19 | 17 | 28 | 22 | 55 |
| | Oil Resistance Test (IRM903) | Change ratio of Tensile Strength | % | -20 | -22 | -25 | -27 | -30 | -17 | -22 | -6 |
| | | Hardness Change | Point | -17 | -17 | -18 | -18 | -19 | -16 | -13 | -20 |
| | | Compression Set Ratio | % | 32 | 35 | 38 | 40 | 44 | 29 | 27 | 22 |

The properties of Examples 1 to 5 and Comparative Examples 1 to 3 were evaluated as follows.

In a wear test, the wear volume of a test piece was measured. Specifically, a disc-shaped test piece was prepared from the sheet 31 according to JIS K7204. The wear volume of the test piece was measured in an environment in which an ambient temperature is a room temperature under conditions that the wearing ring is H-22, the rotation speed is 60 rpm, the number of times of tests is 1000 times, and the load is 9.8 N. The target value of the wear volume is 70 mm³ or less.

In a heat resistance test, the change ratio of the tensile strength, the hardness change, and the compression set ratio of a test piece were calculated. Specifically, a dumbbell-shaped No. 3 test piece was prepared from the sheet 31 according to JIS K6251. The tensile strength of the test piece was measured before and after heating of the test piece, and the change ratio of the tensile strength was calculated. The test piece was heated in an environment of 150°C for 72 hours.

Regarding the compression set ratio, specifically, a large disc-shaped test piece was prepared from the sheet 31 according to JIS K6262. The test piece was left in an environment of 175°C for 72 hours while being compressed by 25%, and the compression set ratio of the test piece after cancellation of the compression of the test piece was measured. The target value of the compression set ratio is 25% or less.

In an oil resistance test, the change ratio of the tensile strength, the hardness change, and the volume change ratio of an evaluation material of a test piece were calculated. Specifically, a dumbbell-shaped No. 3 test piece was prepared from the sheet 31 according to JIS K6251. The tensile strength, the hardness, and the volume of the test piece were measured before and after the test piece was immersed in IRM 903 oil, and the change ratios thereof were calculated. The test piece was immersed in IRM 903 oil in an environment of 150°C for 72 hours. The target value of the volume change ratio was 40% or less.

The properties of Example 1 were evaluated as follows. 90 parts by weight (%) of the trial product as the ACM 20, 10 parts by weight of Vamac® Ultra LT as the AEM 10, 65 parts by weight of Seast G-SO (carbon black, manufactured by Tokai Carbon Co., Ltd.) as the reinforcing material, 9 parts by weight of Nipsil E74P (wet silica manufactured by Tosoh Silica Corporation), 2 parts by weight of Nocrac CD (manufactured by Ouchi Shinko Chemical Industrial Co., Ltd.) as an antioxidant, 1.5 parts by weight of Diak No. 1 (manufactured by DuPont) as a crosslinking agent, 1 part by weight of Nocceler DT (manufactured by Ouchi Shinko Chemical Industrial Co., Ltd.) as a crosslinking accelerator, 2 parts by weight of Lunac S-70V (manufactured by Kao Corporation) as a processing aid, 2 parts by weight of Armeen 18D (manufactured by Lion Corporation) as a processing aid, 2 parts by weight of Phosphanol RL-210 (manufactured by Toho Chemical Industry Co., Ltd.) as a processing aid, and 0.5 parts by weight of A-187T (manufactured by Nissho Sangyo Co., Ltd.) as a coupling agent were kneaded using a pressure kneader and an open roll which are known. The kneaded material was subjected to primary vulcanization at 180°C for 10 minutes to 15 minutes and then subjected to secondary vulcanization at 180°C for 4 hours to prepare the sheet 31. Using the prepared sheet 31, the above-described measurement and calculation in the wear test, the heat resistance test, and the oil resistance test were performed The results are indicated in Table 7.

The properties of Example 2 were evaluated as follows. The sheet 31 was prepared by the same method as that in Example 1, except that the amount of the trial product as the ACM 20 was changed from 90 parts by weight to 80 parts by weight and the amount of Vamac® Ultra LT as the AEM 10 was changed from 10 parts by weight to 20 parts by weight. The same evaluation as that in Example 1 was performed on the sheet 31. The results are indicated in Table 7.

The properties of Example 3 were evaluated as follows. The sheet 31 was prepared by the same method as that in Example 1, except that the amount of the trial product as the ACM 20 was changed from 90 parts by weight to 70 parts by weight and the amount of Vamac® Ultra LT as the AEM 10 was changed from 10 parts by weight to 30 parts by weight. The same evaluation as that in Example 1 was performed on the sheet 31. The results are indicated in Table 7.

The properties of Example 4 were evaluated as follows. The sheet 31 was prepared by the same method as that in Example 1, except that the amount of the trial product as the ACM 20 was changed from 90 parts by weight to 60 parts by weight and the amount of Vamac® Ultra LT as the AEM 10 was changed from 10 parts by weight to 40 parts by weight. The same evaluation as that in Example 1 was performed on the sheet 31. The results are indicated in Table 7.

The properties of Example 5 were evaluated as follows. The sheet 31 was prepared by the same method as that in Example 1, except that the amount of the trial product as the ACM 20 was changed from 90 parts by weight to 50 parts by weight and the amount of Vamac® Ultra LT as the AEM 10 was changed from 10 parts by weight to 50 parts by weight. The same evaluation as that in Example 1 was performed on the sheet 31. The results are indicated in Table 7.

The properties of Comparative Example 1 were evaluated as follows. The sheet 31 was prepared by the same method as that in Example 1, except that the amount of the trial product as the ACM 20 was changed from 90 parts by weight to 100 parts by weight and the amount of Vamac® Ultra LT as the AEM 10 was changed from 10 parts by weight to 0 parts by weight. The same evaluation as that in Example 1 was performed on the sheet 31. The results are indicated in Table 7.

The properties of Comparative Example 2 were evaluated as follows. The sheet 31 was prepared by the same method as that in Example 1, except that the amount of the trial product as the ACM 20 was changed from 90 parts by weight to 70 parts by weight and 10 parts by weight of Vamac® Ultra LT as the AEM 10 was changed to 30 parts by weight of Vamac® GLS. The same evaluation as that in Example 1 was performed on the sheet 31. The results are indicated in Table 7.

The properties of Comparative Example 3 were evaluated as follows. The sheet 31 was prepared by the same method as that in Example 1, except that the amount of the trial product as the ACM 20 was changed from 90 parts by weight to 70 parts by weight and 10 parts by weight of Vamac® Ultra LT as the AEM 10 was changed to 30 parts by weight of TLP10F-1 (manufactured by Du Pont-Mitsui Fluorochemicals Co., Ltd.) as polytetrafluoroethylene (PTFE). The same evaluation as that in Example 1 was performed on the sheet 31. The results are indicated in Table 7.

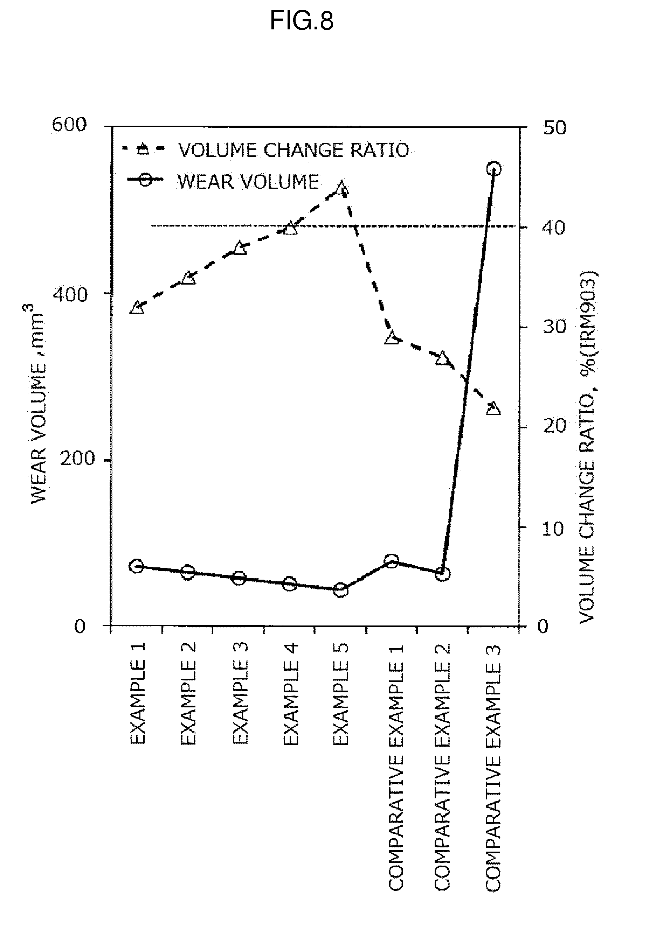

FIG. 8 illustrates the wear volumes and the volume change ratios of Examples 1 to 5 and Comparative Examples 1 to 3.

As indicated in Table 3 and FIG. 8, as the number of parts by weight of the trial product as the ACM 20 decreases, the oil resistance due to the trial product as the ACM 20 decreases, and the volume change ratio in the oil resistance test increases. When the number of parts by weight of the trial product as the ACM 20 is 50 parts by weight which is the same as that of Vamac® Ultra LT as in Example 5, the volume change ratio is 44% which is out of the target value range that is 40% or less.

When the number of parts by weight of the trial product as the ACM 20 is 90 parts by weight and the number of parts by weight of Vamac® Ultra LT as the AEM 10 is 10 parts by weight as in Example 1, the wear volume in the wear test is 72 mm³ which is out of the target value range that is 70 mm³ or less. However, as the weight ratio of Vamac® Ultra LT as the AEM 10 to the trial product as the ACM 20 increases, the wear resistance due to Vamac® Ultra LT improves, and the wear volume decreases. In Examples 2 to 5, the wear volume is within the target value range.

As can be understood from the above results, in Examples 2 to 4, the wear volume and the volume change ratio are within the target value ranges, and thus the wear resistance and oil resistance are both improved.

Thus, synergy between the ACM 20 and the AEM 10 is effectively produced under the following conditions: the AEM 10 is mixed with the ACM 20; when the weight percent of the entirety of the ACM 20 and the AEM 10 is expressed by 100 wt%, the weight percent of the ACM 20 is 60 wt% to 80 wt% and the weight percent of the AEM 10 is 20 wt% to 40 wt%; and the weight ratio of BA to EA in the backbone monomer 21 of the ACM 20 is 1.0 to 1.2. That is, by mixing the ACM 20 having the heat resistance, low-temperature resistance, oil resistance, and compression set resistance with the AEM 10 having the heat resistance and wear resistance, the wear resistance and oil resistance are both improved. As a result, the heat resistance, low-temperature resistance, oil resistance, compression set resistance, and wear resistance of the sheet 31 are improved.

In the first and second embodiments, the crosslinking monomer 22 of the ACM 20 has a carboxyl group. However, the invention is not limited to this configuration. For example, the crosslinking monomer of the ACM may further have an active chlorine group in addition to the carboxyl group.

In the first and second embodiments, the sealing device 60 is disposed between the shaft member 70 and the housing 80. However, the sealing device according to the invention may be used in a product, such as a rolling bearing or a transmission, which is disposed in oil or in contact with oil at all times in a usage environment of -40°C to 170°C and is required to have sufficient heat resistance, oil resistance, compression set resistance, wear resistance, and low-temperature resistance.

In addition, in the first and second embodiments, the core member 61 of the sealing device 60 is fixed to the housing 80. However, in the invention, the core member may be fixed to the outer peripheral face of the shaft member. The sealing device may be attached to a rolling bearing and the core member may be fixed to an outer ring, an inner ring, or an intermediate ring of the rolling bearing.

In addition, in the first and second embodiments, the core member 61 of the sealing device 60 has the tubular portion 61A and the radially-extending portion 61B. However, in the invention, the core member need not have the tubular portion.

In the first and second embodiments, the sealing device 60 includes the spring 69. However, in the invention, the sealing device need not include the spring or a sealing device in another form may be provided.

In the acrylic rubber composition and the sealing device according to the invention, the backbone monomer of the first polymer is a mixture of ethyl acrylate and butyl acrylate, the weight ratio of butyl acrylate to ethyl acrylate is 0.8 to 1.3, and the crosslinking monomer of the first polymer has a carboxyl group. Therefore, the heat resistance, low-temperature resistance, oil resistance, and compression set resistance are improved.

## Claims

1. An acrylic rubber composition essentially consisting of a first polymer containing a backbone monomer and a crosslinking monomer, the backbone monomer being a mixture of ethyl acrylate and butyl acrylate, a weight ratio of butyl acrylate to ethyl acrylate being 0.8 to 1.3, and the crosslinking monomer having a carboxyl group.

2. The acrylic rubber composition according to claim 1, wherein the weight ratio of butyl acrylate to ethyl acrylate in the backbone monomer of the first polymer is 0.95 to 1.05.

3. The acrylic rubber composition according to claim 1, wherein:
a second polymer containing a backbone monomer and a crosslinking monomer is mixed with the first polymer, the backbone monomer of the second polymer being formed of ethylene methyl acrylate, the crosslinking monomer of the second polymer having a carboxyl group, and a glass transition temperature of the second polymer being -40°C or lower; and
when a weight percent of an entirety of the first polymer and the second polymer is expressed by 100 wt%, a weight percent of the first polymer is 60 wt% to 80 wt% and a weight percent of the second polymer is 20 wt% to 40 wt%, and the weight ratio of butyl acrylate to ethyl acrylate in the backbone monomer of the first polymer is 1.0 to 1.2.

4. A sealing device comprising:
a core member; and
an elastic member fixedly fitted to the core member, wherein
the elastic member has
a base portion fixed to the core member and
a lip portion that extends from the base portion and slides on a sliding member, and
the elastic member is formed of the acrylic rubber composition according to any one of claims 1 to 3.
